# EUROPEAN PATENT SPECIFICATION

(11) **EP 3 244 315 B1**
(45) Date of publication and mention of the grant of the patent: **02.01.2019**
(21) Application number: 17162131.1
(22) Date of filing: 21.03.2017
(51) Int. Cl.: G06F 11/14, G06F 11/10

(54) **METHOD AND APPARATUS FOR PERFORMING DATA RECOVERY IN REDUNDANT STORAGE SYSTEM**
VERFAHREN UND VORRICHTUNG ZUR DURCHFÜHRUNG VON DATENWIEDERHERSTELLUNG IN EINEM SPEICHERSYSTEM
PROCÉDÉ ET APPAREIL PERMETTANT D'EFFECTUER UNE RÉCUPÉRATION DE DONNÉES DANS UN SYSTÈME DE MÉMOIRE REDONDANT

(30) Priority: 13.05.2016 TW 105114847
(43) Date of publication of application: 15.11.2017
(73) Proprietor: Synology Incorporated, Taipei 103 (TW)
(72) Inventor: Lien, Huai-En, 103 Taipei (TW); Cheng, Chung-Chiang, 103 Taipei (TW); Yeh, Chien-Kuan, 231 New Taipei City (TW)
(74) Representative: Becker Kurig Straus

(56) References cited:
- WO-A1-91/13394
- US-A1- 2002 169 996
- US-A1- 2014 281 697
- US-B1- 8 417 987

## Description

The present invention relates to performance management for a data storage system, and more particularly, to a method and an apparatus for performing data recovery in a redundant storage system according to the pre-characterizing clauses of the appended independent claims 1, 8, 9 and 15.

A redundant storage system with redundant storage ability such as a Redundant Array of Independent Disks (RAID) may combine a plurality of storage devices as a storage pool, and dispatch the redundant data into the different storage devices, in which the redundant data may help with data recovery when a single device is malfunction. When bit rot or silent data corruption occurs, however, the conventional storage system lacks an efficient mechanism to solve these problems. For example, in a situation where the RAID level of the conventional RAID is RAID 5, in order to check if the data of a data chunk A1 of one of the plurality of storage devices is correct, the corresponding data chunks A2, A3 and the parity chunk Ap are read from other storage devices for comparison (in particular, by comparing the original data of the data chunk A1 and the calculated data which is calculated according to the data chunks A2, A3 and the parity chunk Ap) . This may greatly degrade the performance of randomly reading data. In addition, even when the comparison determines that the original data and the calculated data are different, the conventional RAID is not able to check which data is correct. In another example, in a situation where the RAID level of the conventional RAID is RAID 1, twice as much time will be taken to check if bit rot occurs.

Although the related arts provide some methods to solve these problems, other undesirable side effects may occur as a result. Therefore, a novel method and related architecture are required.

US 2014281697 A1 discloses a method of coordinating data recovery in a storage stack with a hierarchy of layers, which includes: upon an input/output (I/O) request from a layer of the stack, issuing a help response to recover the data from a higher layer in hierarchy order. The method further includes processing the help response, at the higher layer, by issuing a return code of success or further help response to an even higher layer.

US 8417987 B1 discloses an technique for tracking, tolerating and correcting unrecoverable errors (i.e., errors that cannot be recovered by the existing RAID protection schemes) in a RAID array by reducing the need to perform drastic recovery actions, such as a file system consistency check, which typically disrupts client access to the storage system. Advantageously, ability to tolerate and correct errors in the RAID array beyond the fault tolerance level of the underlying RAID technique increases resiliency and availability of the storage system.

WO 91/13394 A1 discloses methods and apparatus for detecting and correcting various data errors that may arise in a mass data storage apparatus comprising a set of physical mass storage devices operating as one or more larger logical mass storage devices. A method and apparatus is provided for detecting and reconstructing incorrectly routed data. A method and apparatus is also provided for detecting when one or more physical devices fails to write a block of data, and for reconstructing lost data.

US 2002/169996 A1 discloses a table for identifying potentially bad location addresses based on prior knowledge and performing specific operations using the table data to ensure write recovery is disclosed. A Write Recovery Table (WRT) is provided, which consists of a list of LBAs requiring such special write recovery action so that a WRITE AND VERIFY command is issued instead of a WRITE command. If the WRITE AND VERIFY command fails, the RAID controller can issue a REASSIGN BLOCKS command for the bad block and re-issue the WRITE AND VERIFY command. If WRITE AND VERIFY commands are not supported, then the system can use a READ command with the "Force Unit Access" flag bit being set to "1" to verify the written data. Further, the WRT may be combined with Bad Data Table (BDT) to reject a Read Request from the host for a matched LBA (that is listed therein) because the data in the addressed block is known incorrect when a write recovery action is not warranted.

### Summary of the Invention

One of the objects of the present invention is to provide a method and a related device for performing data recovery in a redundant storage system to solve the problems which exist in the related arts.

Another objective of the present invention is to provide a method and a related device for performing data recovery in a redundant storage system that can boost the performance of the redundant storage system.

According to at least one embodiment of the present invention, a method for performing data recovery in a redundant storage system is disclosed, in which the redundant storage system includes a plurality of storage devices . The method includes : sending at least one basic command from a specific layer of a plurality of layers of the redundant storage system to a lower layer of the specific layer, in which the basic command includes a read command arranged to request the lower layer to send back a data block corresponding to an index; and the specific layer sends at least an additional command to the lower layer, in which the additional command includes a read retry command arranged to request the lower layer to send back a redundant data block corresponding to the index to recover the data block; in which the redundant storage system includes a file system and a plurality of storage elements, the file system is located in a topmost layer in the plurality of layers, and storage devices of the plurality of storage devices located in a bottommost layer of the plurality of layers include at least one set of storage devices of the plurality of storage devices.

In some embodiments, when the lower layer sends an error report command to the specific layer, the specific layer stops sending the read retry command to the lower layer. In addition, when the lower layer sends back the same data to the specific layer twice, the specific layer stops sending the read retry command to the lower layer. Requesting the lower layer to send back the data block corresponding to the index includes: sending back a data and a first checking information; in which the method for performing data recovery in the redundant storage system further includes: generating a second checking information of the data; comparing the first checking information and the second checking information of the data; and sending the additional command to the lower layer when the first checking information and the second checking information of the data are different.

A device for performing data recovery in a redundant storage system is also provided, in which the device may include at least one part of the redundant storage system (e.g. a part or all of it) . The device may include: a control circuit located in a specific layer of a plurality of layers in the redundant storage system and coupled to a plurality of storage devices of the redundant storage system, in which the control circuit is arranged to control the operation of the redundant storage system. The step of controlling the operation of the redundant storage system includes: sending at least one basic command to a lower layer of the specific layer from the specific layer, in which the basic command includes a read command, and the read command is arranged to request the lower layer to send back a data block corresponding to an index; and sending at least an additional command to the lower layer from the specific layer, in which the additional command includes a read retry command, and the read retry command is arranged to request the lower layer to send back a redundant data block corresponding to the index to recover the data block. In addition, the redundant storage system includes a file system and a plurality of storage elements, where the file system is located in a topmost layer of the plurality of layers, and storage elements of the plurality of storage elements located in a bottommost layer of the plurality of layers include at least one set of storage devices of the plurality of storage devices.

In some embodiments, when the lower layer sends back an error report command to the specific layer, the specific layer stops sending the read retry command to the lower layer. In addition, when the lower layer sends back the same data to the specific layer twice, the specific layer stops sending the read retry command to the lower layer. The step of requesting the lower layer to send back the data block corresponding to the index includes: sending back a data and a first checking information; in which controlling the operation of the redundant storage system further includes: generating a second checking information of the data; and when the second checking information of the data and the first checking information are different, sending the additional command to the lower layer.

The methods and associated devices disclosed by the invention, which is defined in detail in the appended independent claims 1, 8, 9 and 15, can properly solve the related art problems with few or no side effects. In addition, the methods and associated devices of the present invention can efficiently boost the overall performance without wasting operation resources.

In the following, the invention is further illustrated by way of example, taking reference to the accompanying drawings. Thereof
FIG. 1 is a diagram illustrating a redundant storage system according to an embodiment of the present invention,
FIG. 2 is a diagram illustrating a storage system according to an embodiment of the present invention,
FIG. 3 is a flowchart illustrating a control scheme of a file system end of the redundant storage system shown in FIG. 1,
FIG. 4 is a flowchart illustrating another control scheme of a storage system end of the redundant storage system shown in FIG. 1,
FIG. 5 is a diagram illustrating a redundant ability searching scheme of the redundant storage system shown in FIG. 1, and
FIG. 6 is a diagram illustrating a redundant storage system according to another embodiment of the present invention.

Embodiments of the present invention provide a data recovery mechanism applied in a redundant storage system, in which the redundant storage system can be a storage system with redundant storage ability or a multilayer storage system stack composed of a plurality of storage systems with redundant storage ability. For example, the storage system can include at least one Redundant Array of Independent Disk (RAID) or at least one Distributed Replicated Block Device (DRBD), and the data recovery mechanism can be implemented in the storage system. In another example, the plurality of storage systems can include at least one RAID or at least one DRBD, and the data recovery mechanism can be implemented in any of the plurality of storage systems.

Based on the data recovery mechanism of embodiments of the present invention, the redundant storage system can automatically recover or amend data. When the file system or application finds corrupted data via a checksum or a hash value, the data recovery mechanism can automatically perform a background data recovery operation to assure the user will not read the incorrect content. For clarity, the file system with built-in checking ability can be an example of the file system of the redundant storage system.

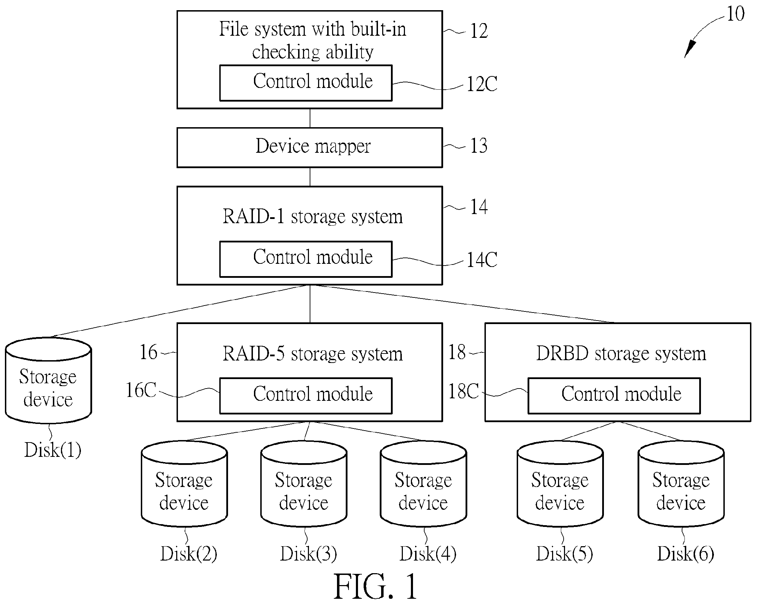

FIG. 1 is a diagram illustrating a redundant storage system 10 according to an embodiment of the present invention, in which the redundant storage system 10 can include the abovementioned multilayer storage system stack. For example, the redundant storage system 10 can include a file system 12 with built-in checking ability such as a file system with built-in checksum ability (which has the ability of using a stored checksum to check the error of a data block) or a file system with built-in hash value (which has the ability of using a stored hash value to check the error of the data block), and may further include a device mapper 13. In addition, the redundant storage system 10 can include a plurality of storage elements such as at least one storage system and at least one storage device. More particularly, the abovementioned storage system can include a plurality of storage systems such as a RAID-1 storage system 14 (whose RAID level is RAID 1), a RAID-5 storage system 16 (whose RAID level is RAID 5) and a DRBD storage system 18, and the abovementioned at least one storage device can include a plurality of storage devices such as storage devices Disk(1), Disk(2) ...and Disk(6). Each of the plurality of storage devices may include at least one physical storage media. For example, each of the plurality of storage devices can be a Hard Disk Drive (HDD), a Solid State Drive (SSD), a partition of a HDD or a partition of a SDD. In addition, each of the RAID-1 storage system 14, the RAID-5 storage system 16 and the DRBD storage system 18 may include a storage pool composed of a union of a plurality of storage devices, in which the user can regard the storage pool as one device.

For brevity, regarding one of the plurality of layers of the redundant storage system 10 such as a specific layer, a layer (if it exists) below the specific layer is called a lower layer and a layer above the specific layer is called an upper layer. The lower layer can be the layer adjacent to the specific layer; in this situation, the lower layer can be a lower adjacent layer. The upper layer can be adjacent to the specific layer; in this situation, the upper layer can be an upper adjacent layer.

As shown in FIG. 1, the file system 12 can be located in a topmost layer of the plurality of the layers, and the storage device Disk(2), Disk(3) ...and Disk(6) can be located in the bottommost layer, in which storage devices Disk(2), Disk(3) and Disk(4) belong to the RAID-5 storage system 16 while storage devices Disk(5) and Disk(6) can belong to the DRBD storage system 18. The storage device Disk(1), the RAID-5 storage system 16 and the DRBD storage system 18 are located in an intermediate layer of the plurality of layers (which is an upper layer with respect to the bottommost layer, and a lower layer with respect to the topmost layer) . The RAID-1 storage system 14 is located in another intermediate layer of the plurality of layers (which is a lower layer with respect to the topmost layer, and an upper layer with respect to the bottommost layer), in which the storage device Disk(1), the RAID-5 storage system 16 and the DRBD storage system 18 belongs to the RAID-1 storage system 14. In addition, in the tree structure shown in FIG. 1, the file system 12 is located in the topmost layer, and the device mapper 13 can be implemented between the file system 12 and the RAID-1 storage system 14. The redundant storage system 10 may include a plurality of control modules corresponding to the data recovery mechanism such as control modules 12C, 14C, 16C and 18C. Any of the plurality of control modules can be a control program module corresponding to the data recovery mechanism or a control circuit corresponding to the data recovery mechanism.

In the redundant storage system 10, each of the file system 12, the RAID-1 storage system 14, the RAID-5 storage system 16 and the DRBD storage system 18 can operate under the control of its own respective control module 12C 14C 16C and 18C. Via at least one portion (e.g. a portion or all) of the plurality of control modules such as the control modules 12C, 14C, 16C and 18C, the storage systems can be stacked with each other (e.g. the RAID storage system 14 can exist in another layer of RAID such as the RAID-5 storage system 16, or in another layer of DRBD system such as the DRBD storage system 18), so as to form the abovementioned multilayer storage system stack. According to some embodiments, the conventional storage system and conventional storage device can also join the multilayer storage system stack even if they do not install any control module corresponding to the data recovery mechanism or do not have redundant storage ability. For example, when recovering corrupted data, they can use all the redundant ability of the lower storage system stack (e.g. the part of the multilayer storage system stack located below them).

In the embodiment shown in FIG.1, there are three storage systems stacked together with redundant ability (e.g. the RAID-1 storage system 14, the RAID-5 storage system 16 and the DRBD storage system 18). In a situation where all three storage systems and the file system 12 located in the topmost layer install the control modules corresponding to the data recovery mechanism, the redundant storage system 10 can provide at most five different versions of the same file for performing data recovery automatically. Even if the device mapper 13 does not have redundant storage ability and does not install any control module corresponding to the data recovery mechanism, the operation of the data recovery mechanism will not be affected.

The plurality of control modules such as the control modules 12C, 14C, 16C and 18C can use the same communication interface. Regarding the system/device in the plurality of layers (such as the file system 12 located in the topmost layer, the storage devices or the storage systems located in the intermediate layer, or the storage devices Disk(2), Disk(3) ... and Disk(6) located in the bottommost layer), any two adjacent systems/devices can predefine an interface for communication and data transmission. Normally, no matter what operating system is used to implement the file system 12, every layer of the redundant storage system 10 can use the following four basic commands:
(CMD1). Read(block_index);
(CMD2). Write(DATA, block_index);
(CMD3). Return(DATA, block_index); and
(CMD4). Return(ERR, block_index);

Regarding a command sender, the first two commands of these commands are the commands sent to the lower layer (e.g. the lower layer adjacent to the layer where the command sender is located) from the specific layer, while the last two commands are sent to the upper layer (e.g. the upper layer adjacent to the layer where the command sender is located) from the specific layer. In the redundant storage system 10, the first two commands can be sent to the lower layers by any of the file system 12, the device mapper 13, the RAID-1 storage system 14, the RAID-5 storage system 16 and the DRBD storage system 18 while the last two commands can be sent to the upper layers by any of the storage devices Disk(1), Disk (2), ..., and Disk (6), or can be sent to the upper layers by any of the device mapper 13, the RAID-1 storage system 14, the RAID-5 storage system 16 and the DRBD storage system 18. For example, the command Read(block_index) can be arranged to read a data block corresponding to an index block_index from the storage device or the storage system of the lower layer, thus the command Read(block_index) can be called the read command. The command Write(DATA, block_index) can be arranged to write the data DATA corresponding to the index block_index into the storage device/ the storage system of the lower layer, thus the command Write (DATA, block_index) can be called the write command. The command Return(DATA, block_index) can be arranged to send the data DATA corresponding to the index block_index back to the upper layer, thus the command Return (DATA, block_index) can be called the data return command. The command Return(ERR, block_index) can be used to report the failure of the data reading operation (i.e. reading the operation of the data block corresponding to the index block_index) corresponding to the index block_index to the upper layer, thus the command Return(ERR, block_index) can be called the error report command, in which the error information ERR points out the failure.

It should be noted that these basic commands are shown in the exhibited format to indicate their main characteristic. For different types of operating systems, the detailed definition of these basic commands is variable, but the main characteristic still corresponds to the abovementioned example.

The data recovery mechanism (the plurality of control modules, particularly) can recognize and use these commands, and can use at least one additional command (e.g. one or more additional commands) including:
(CMD5). Read_Retry(block_index).

Regarding a command sender, the additional command(s) is the command sent to the lower layer (e.g. the lower layer adjacent to the layer where the command sender is located) from the specific layer. In the redundant storage system 10, the additional command(s) can be sent to the lower layers by any of the file system 12, the device mapper 13, the RAID-1 storage system 14, the RAID-5 storage system 16 and the DRBD storage system 18. For example, the command Read_Retry(block_index) is arranged to read the redundant data block corresponding to the index block_index from the storage device or the storage system of the lower layers to perform a read retry operation, thus the command Read_Retry(block_index) is called the read retry command. When the data is correct, the data of the redundant data block corresponding to the index block_index is the same as the data of the data block corresponding to the index block_index.

In some embodiments, the command Read_Retry(block_index) and command Read (block_index) can be integrated into one command with the same name, such as a command Read(block_index, RETRY). They can be distinguished by a new bit flag RETRY, in which the bit flag RETRY is arranged to indicate whether the command is the command Read_Retry(block_index), thus the bit flag RETRY is also called a retry bit flag. For example, when the big flag RETRY is set to have logic value 1, the command Read(block_index, RETRY) represents the command Read_Retry(block_index); otherwise (i.e. the big flag RETRY is set to have logic value 0), the command Read(block_index, RETRY) represents the command Read(block_index). This design can be applied for every combination of the storage device or for various storage systems. Assuming there is a conventional storage element in the lower layer which does not install any control module corresponding to the data recovery mechanism, as the conventional storage element cannot recognize the bit flag RETRY, the bit flag RETRY will be passed to the lower layer continually. If the conventional storage element is in the bottommost layer, the command Read (block_index, RETRY) is simply considered as the command Read(block_index) instead of the command Read_Retry(block_index). The advantage of this design is, even when the conventional storage element cannot recognize the bit flag RETRY of the command Read (block_index, RETRY) and the command Read_Retry(block_index), the conventional storage element can still join the multilayer storage system stack.

For brevity, in the following embodiments, the command Read_Retry(block_index) can be an example of the abovementioned additional command, in which the command Read_Retry(block_index) can be replaced with the command Read(block_index, RETRY). The data recovery mechanism follows some predetermined rules for operation. When an error in the data content is found, the data recovery mechanism can follow a depth-first search rule to perform a depth-first search. More particularly, the data recovery mechanism can search all available redundant storage ability in the multilayer storage system stack, and when the correct redundant version is found, the data recovery mechanism can immediately perform recovery. When the data recovery mechanism is searching, because the storage device or the storage system of the lower layer does not have any redundant ability and does not necessarily install any control module corresponding to the data recovery mechanism, it can follow a stop searching rule to stop searching. Based on the stop searching rule, when any of a set of predetermined conditions is satisfied, one of the plurality of control modules (e.g. a control module of one of the file system 12, the RAID-1 storage system 15, the RAID-5 storage system 16 and the DRBD storage system 18) can stop searching. The set of predetermined condition includes:
(C1). The lower layer sends back the command Return(ERR, block_index) (i.e. the lower layer replies the control module with the command Return(ERR, block_index)); and
(C2) when the control module has sent the command Read_Retry(block_index) to the lower layer twice, the control module receives the same data twice (i.e. the lower layer replies the control module with the command Return(DATA, block_index), and the data DATA sent twice is the same);
where the command Return (ERR, block_index) in the predetermined condition (C1) is called the error report command, meaning the one who sends back the command Return(ERR, block_index) cannot provide the redundant version. The predetermined condition (C2) means the one who sends back the same data twice and any elements in a lower layer (e.g. any storage device or any storage system in the lower layer of the one who sends back the same data twice, if said any storage/system exists) cannot provide a redundant version. The above predetermined conditions (C1) and (C2) mean the control module has completed searching all redundant ability of the lower layer, and needs to keep searching a sibling layer of the control module, or report the error to the upper layer of the control module.

After sending the command Read_Retry(block_index) to the lower layer, the control module can receive the data from the lower layer and calculate the checking information of the data (e.g. the checksum or the hash value of the data). To determine if the two received data are the same, the control module can save the calculated checking information temporarily. When the checking information of the two received data is the same, the control module determines the two received data are the same; otherwise, the control determines the two received data are different.

To avoid temporary data in the redundant storage system 10 increasing linearly due to the incrementing of corrupted data, when another set of the predetermined condition is satisfied, the control module can release or discard the calculated checking information (e.g. the checksum or the hash value), in which the other set of predetermined conditions includes:
(C11). The control module is going to send back the command Return(ERR, block_index) to the upper layer; and
(C12). The control module receives the command Write(DATA, block_index) from the upper layer;
where the index block_index involved with the predetermined conditions (C11) and (C12) equals the index block_index of the command Read_Retry(block_index) sent to the lower layer.

The predetermined condition (C11) means the control module has tested the redundant storage ability of those storage devices below the control module in the redundant storage system 10. These will be all the storage elements (e.g. the storage device or the storage system) located below the control module. In addition, the command in the predetermined condition (C12) is a write command which means the data recovery mechanism finds a correct version of data somewhere in the redundant storage system 10. For example, in the plurality of layers, a storage system in a layer above the control module has found a correct version of data from a storage element (e.g. a storage device or a storage system) of the storage system, and writes the correct data back via the command Write(DATA, block_index). More particularly, the storage system writes the correct data into the storage system stack of the lower layer (e.g. the part of the plurality of layers below the control module), in which, because the abovementioned storage system is located above the control module, it can be regarded as a file system 12 end of the control module. Therefore, when the command Write(DATA, block_index) is received, the control module can release all the temporary data associated with the data block corresponding to the index block_index.

A control module of the plurality of control modules can be one of both of the file system end and the storage system end, and operates correspondingly, in which the operation corresponding to the file system end includes the operation when the control module controls its lower layer, while the operation corresponding to the storage system end includes the operation when the control module performs the request of its upper layer. The control modules 12C, 14C, 16C and 18C of each of the file system 12, the RAID-1 storage system 14, the RAID-5 storage system 16 and the DRBD storage system 18 can be the file system end. In another example, in a situation where an application sends a predetermined command to the file system 12, the control module 12C of the file system 12 can be the storage system end. In practice, the control module (e.g. one of the control modules 12C, 14C, 16C and 18C) can be implemented as a program module executed on at least one processor (e.g. one or more processors), or be implemented as a customized hardware circuit. In a situation where the redundant storage system 10 is implemented as a server system, the abovementioned processor can be a processor of the server system.

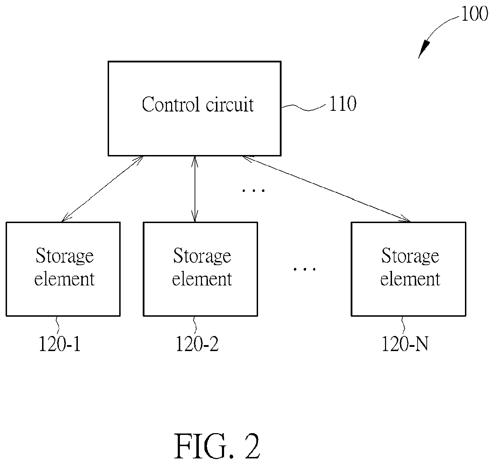

For clarity, the control module can be represented by the control circuit 110 shown in FIG. 2 while the storage system or the storage device in the lower layer of the control module can be represented by N storage elements {120-1, 120-2,..., 120-N} (N is a positive integer), in which the storage system 100 can be used to implement the data recovery mechanism. The control circuit 110 can be the control module 12C, and the N storage elements can include the RAID-1 storage system 14, in which N=1. In another example, the control circuit 110 can be the control module 14C, and the N storage elements can include the storage device Disk (1), the RAID-5 storage system 16 and the DRBD storage system 18, in which N=3. In yet another example, the control circuit 110 can be the control module 16C, and the N storage elements can include the storage devices Disk(2), Disk(3) and Disk(4), in which N=3. In another example, the control circuit 110 can be the control module 18C, and the N storage elements can include the storage devices Disk(5) and Disk(6), in which N=2.

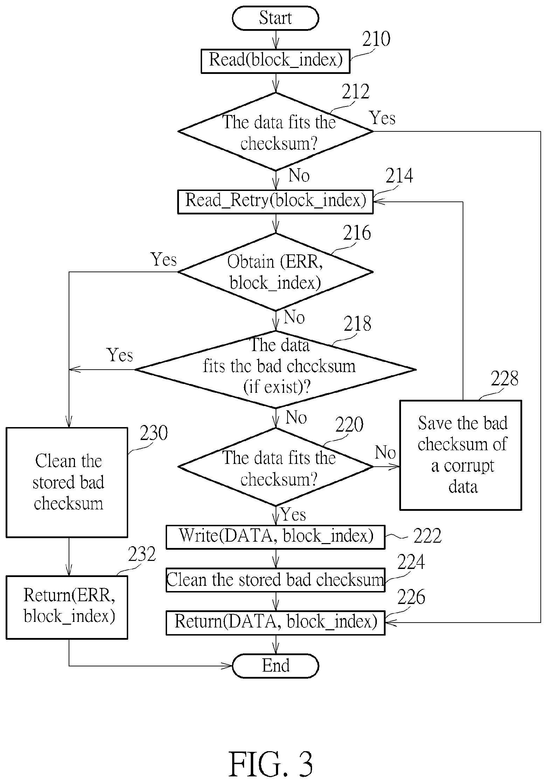

FIG. 3 is a flowchart illustrating a control scheme of a file system end of the redundant storage system 10 shown in FIG. 1, in which the operation of the steps 210, 212, ..., and 232 in the control scheme of the file system end can be an example of the operation of the file system end. In a proper flow of reading data, the file system 12 can send the command Read(block_index) to the storage device or the storage system of the lower layer to read a data block such as a data block corresponding to the index block_index. To implement the data recovery mechanism, the control circuit 110 can perform the following operations based on the control scheme of the file system end.

In step 210, the control circuit 110 can send the command Read(block_index) to the storage device or the storage system of the lower layer in order to read a data block corresponding to the index block_index. For example, the storage device and the storage system of the lower layer send back the read data or the read checksum (e.g. a first checksum) corresponding to the data block, both of which were stored into the redundant storage system 10, and more particularly in the bottommost layer of the plurality of layers.

In step 212, the control circuit 110 can check if the read data fits the read checksum. For example, the control circuit 110 can perform a calculation according to the read data to generate a checksum corresponding to the read data (e.g. a second checksum), and then compare the generated checksum (e.g. the second checksum) with the read checksum (e.g. the first checksum). When these two checksums (the first and the second checksums) are the same (i.e. the read data fits the read checksum), the flow enters step 226 to send the read data back to the upper layer; otherwise (i.e. the read data and the read checksum are different), the flow enters step 214. In a situation where the control circuit 110 is the control module 12C, the upper layer can represent the application above the plurality of layers. In another example, in a situation where the control circuit 110 is the control modules 14C, 16C or 18C, the control circuit 110 can send the data read from the upper layer back to the application above the plurality of layers.

In step 214, the control circuit 110 can send the command Read_Retry(block_index) to the storage device or the storage system of the lower layer. For example, the control circuit 110 can use the command Read_Retry(block_index) to inform the lower layer to activate the failure recovery procedure, and save the bad checksum (more particularly, the generated checksum in step 212) of the corrupted data temporarily.

In step 216, the control circuit 110 can check if (ERR, block_index) is obtained from the lower layer. When the storage device or the storage system of the lower layer sends back (ERR, block_index) via the command Return(ERR, block_index) as a response (which means there is no redundant data in the lower layer), then the flow enters the sub operating path from step 230 to report the failure to the upper layer (step 232); otherwise (e.g. the storage device or the storage system can respond by sending the data back), the flow enters step 218. In a situation where the control circuit 110 is the control module 12C, the upper layer can represent the application above the plurality of layers. In another example, in a situation where the control circuit 110 is the control module 14C, 16C or 18C, the control circuit 110 can report the failure to the application above the plurality of layers via the upper layer.

In step 218, the control circuit 110 can check if the read data (i.e. the data read after step 214) fits the bad checksum (if it exists) which was saved previously. For example, the control circuit 110 can perform a calculation according to the read data to generate the checksum corresponding to the data, and then compare the generated checksum with the bad checksum saved previously. When these two checksums are the same (i.e. the data read after step 214 fits the bad checksum saved previously, meaning there is no redundant data in the lower layer), then the flow enters the sub operating path from step 230 to report the failure to the upper layer (step 232); otherwise (i.e. the data read from step 214 does not fit the bad checksum saved previously), the flow enters step 220.

Regarding the bad checksum saved previously, if it does not exist, then the checking result in step 218 does not fit, and the flow therefore enters step 220.

In step 220, the control circuit 110 can check if the read data (i.e. the data in step 218) fits the read checksum (i.e. the read checksum corresponding to the command Read(block_index) in step 210) . The control circuit 110 performs a calculation according to the read data to generate the checksum corresponding to the read data, and compares the generated checksum with the read checksum in step 210. When these two checksums are the same (i.e. the checksum generated by the read data in step 220 fits the read checksum in step 210), that means the correct version of data is found, and the flow then enters step 222 to write the read data into the lower layer; otherwise (i.e. the read data does not fit the read checksum), the flow enters step 228.

In step 222, the control circuit 110 sends the command Write(DATA, block_index) to the storage device or the storage system of the lower layer to ask for writing the read data in step 220 into the lower layer in order to recover the corrupted version.

In step 224, the control circuit 110 can clean (as shown in the operating flow in FIG. 3) the saved bad checksum.

In step 226, the control circuit 110 can send back the data DATA (e.g. the read data in step 220) via the command Return(DATA, block_index) to the upper layer.

In step 228, the control circuit 110 can save the bad checksum (more particularly, the generated checksum in step 220) of a corrupt data (more particularly, the read data in step 220). The flow then enters step 214 to use the command Read_Retry(block_index) repeatedly for reading the redundant version of data until all the redundant versions are tested.

In step 230, the control circuit 110 can clean (as shown in the operating flow in FIG. 3) the saved bad checksum.

In step 232, the control circuit 110 can send back (ERR, block_index) to the upper layer as a response via the command Return (ERR, block_index) to report the failure to the upper layer.

According to some embodiments, all checksums of the control scheme of the file system can be replaced with hash values, in which all bad checksums can be replaced with bad hash values.

According to some embodiments, the command Read(block_index) of the control scheme of the file system end can be replaced with the command Read(block_index, RETRY=0) (in which the bit flag RETRY is set to be logic value 0) while the command Read_Retry(block_index) of the control scheme of the file system end can be replaced with the command Read(block_block_index, RETRY=1) (in which the bit flag RETRY is set to be logic value 1). The similarity between these embodiments and the abovementioned embodiments are omitted here.

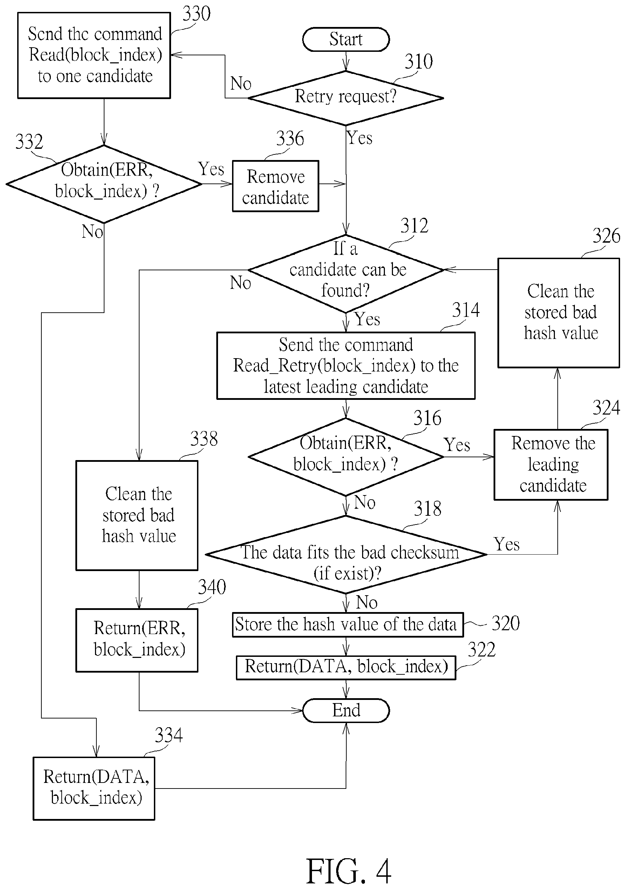

FIG. 4 is a flowchart illustrating a control scheme of a storage system end of the redundant storage system 10 shown in FIG. 1, in which the operation of the steps 310, 312, .., and 340 in the control scheme of the storage system end can be an example of the operation of the storage system end. For example, in the redundant storage system 10, each data block has a plurality of redundant versions (e.g. the data block itself, and at least one replicate of the data block, and/or at least an equivalent version of the data block), and any two of the plurality of redundant versions can be each other's back up version. When reading the data block is required, the redundant storage system 10 can read any of the plurality of redundant versions, thus the plurality of redundant versions can be the candidates of the data block. The candidate list of the plurality of redundant version can be automatically calculated by the control circuit 110 according to a predetermined rule. At least one portion of the candidate list (e.g. a portion or all) can be calculated if needed; therefore, it is not necessary to list a candidate list, save the list as a chart and store it in the redundant storage system 10. Based on the candidate list, the redundant storage system 10 can select one of the plurality of redundant versions if needed. In addition, the candidate list can be applied in the data recovery mechanism. With the candidate list, the data recovery mechanism searches all available redundant versions without missing. When reading the redundant version is required, the control circuit 110 can read the candidate from the top of the candidate list. On the candidate list, the candidate costing the least is usually at the top of the list. For example, regarding the RAID-5 storage system 16, if a data block is located on the storage device Disk(2), the candidate list of the data block can be shown as follows:
{Disk(2), (Disk(3) ^{⊕}Disk(4))};
where the symbol"^{⊕}" means bitwise exclusive OR operation.

Based on the candidate list, the candidates of the data block include: a redundant version located on the storage device Disk(2); and a redundant version located on the storage devices Disk(3) and Disk(4), e.g. the result of bitwise exclusive OR operation of the corresponding data block in the storage devices Disk (3) and Disk (4) . To implement the data recovery mechanism, the control circuit 110 performs the following operation based on the control scheme of the storage system end.

In step 310, regarding the data block corresponding to the index block_index, the control circuit 110 can determine whether the received request (from the upper layer) is a retry request such as the command Read_Retry(block_index). When the received request is a retry request, the flow enters step 312 to execute the command Read_Retry(block_index) from the top of the candidate list of the data block; otherwise, the flow enters step 330 to use a normal read command such as the command Read(block_index) for requesting the lower layer to read the data block.

In step 312, the control circuit 110 can check if a candidate can be found, e.g. the latest leading candidate on the candidate list. When the candidate is found, the flow enters step 314; otherwise, the flow enters step 338.

In step 314, the control circuit 110 sends the command Read_Retry(block_index) to the latest leading candidate on the candidate list.

In step 316, the control circuit 110 can check if (ERR, block_index) is obtained from the lower layer. When the storage device or the storage system of the lower layer sends back (ERR, block_index) via the command Return(ERR, block_index) as a response (i.e. the latest leading candidate has errors such as reading failed), then the flow enters step 324; otherwise (e.g. the storage device or the storage system of the lower layer is able to send back the data as a response), the flow enters step 318.

In step 318, the control circuit 110 can check if the read data (i.e. the data read after step 314) fits the bad hash value saved previously. For example, the control circuit 110 can perform a calculation according to the just read data to generate the hash value corresponding to the data, and compare the generated hash value with the bad hash value saved previously. When these two hash values are the same (i.e. the data read after step 314 fits the bad hash value saved previously, meaning the latest leading candidate has errors, e.g. data corrupted), then the flow enters step 324 to remove the leading candidate from the candidate list; otherwise (i.e. the data read after step 314 does not fit the bad value saved previously), the flow enters step 320.

If the bad hash value saved previously does not exist, the checking result in step 318 does not fit. In this situation, the flow enters step 320.

In step 320, the control circuit 110 saves the hash value of the data (i.e. the hash value of the data read after step 314, e.g. the generated hash value).

In step 322, the control circuit 110 can send back the data DATA (e.g. the data in step 320) via the command Return(DATA, block_index) to the upper layer.

In step 324, regarding the data block corresponding to the index block_index, the control circuit 110 can remove the head candidate from the candidate list, e.g. the latest leading candidate in step 314. Each candidate has a column on the candidate list, and the column labels if each candidate is valid. In this way, the control circuit 110 can use this column to remove a candidate, in which the candidate who is labeled invalid is considered as removed. The control circuit 110 can also clean a candidate's record, in which the candidate whose record is cleaned is also considered as removed.

In step 326, the control circuit 110 can clean the saved bad hash value, e.g. the hash value of the removed candidate in step 324.

In step 330, the control circuit 110 can send the command Read(block_index) to one of the candidates on the candidate list for the candidate reading data.

In step 332, the control circuit 110 can check if (ERR, block_index) is obtained from the lower layer. When the storage device or the storage system of the lower layer sends back (ERR, block_index) via the command Return(ERR, block_index) as a response (i.e. the candidate in step 330 has errors such as reading failed), then the flow enters step 336; otherwise (e.g. the storage device or the storage system of the lower layer can send back the data as a response), the flow enters step 324.

In step 334, the control circuit 110 can send back the data DATA via the command Return(DATA, block_index) (e.g. the data read after step 330) to the upper layer.

In step 336, regarding the data block corresponding to the index block_index, the control circuit 110 can remove the candidate (mentioned in step 330) from the candidate list.

In step 338, the control circuit 110 can clean the saved bad hash value, e.g. the hash value obtained before step 310. For example, based on the checking operation in step 312, when the flow enters step 338 from step 312, there is no valid redundant version in the lower layer of the control circuit 110, thus the control circuit 110 regards all the hash values saved in the data block as bad hash values.

In step 340, the control circuit 110 sends back (ERR, block_index) via the command Return(ERR, block_index) as a response to report the failure to the upper layer.

Regarding if the saved bad hash value exists, the bad hash value saved previously might or might not exist under different situations. For example, in step 322, the data DATA can be sent to the upper layer, and the hash value is compared when the upper layer obtains the data DATA. The bad hash value is saved temporarily if it exists, and the retry request is performed. In this case, the bad hash value exists; however, if the hash value is confirmed as correct after comparison, that is, the data DATA sent in step 322 is correct, the writing can be performed.

According to some embodiments, for those storage systems with redundant ability, the control circuit (e.g. the control circuit 110) can calculate a candidate list of a data block according to a corresponding predetermined rule. In this candidate list, those costing less for accessing are usually on the top of the list while those costing more for accessing are usually on the bottom of the list. The predetermined rule is designed properly in case there are candidates that cost the same, to assure that the same result will be acquired every time this candidate list is checked, instead of acquiring a different sequence of candidates. For example, the control module 16C of the RAID-5 storage system 16 shown in FIG. 1 learns there are three storage devices Disk(2), Disk(3) and Disk (4) in the RAID-5 storage system 16. Based on the predetermined rule corresponding to the RAID-5 storage system 16, if a data block is saved in the storage device Disk(2), the first candidate of the data block must be the storage device Disk(2) due to the lower cost and direct access; Although the data block can also be obtained through the data storage devices Disk(3) and Disk(4), the cost is higher because it is read twice and a bitwise exclusive OR is performed once. In another example, according to the corresponding predetermined rule, the control module 14 C of the RAID-1 storage system 14 learns the candidate list of any data block of the RAID-1 storage system 14 can be:
(block_index) mod N1, (block_index+1) mod N1, (block_index+2) mod N1, ..., (block_index+N1-1) mod N1;
where the symbol N1 means the number of storage devices of the RAID-1 storage system 14 (e.g. one or more HDD and/or one or more SSD). In this way, the redundant storage system 10 does not need extra storage device space for storing candidate lists corresponding to all blocks to save storage capacity.

According to some embodiments, when the control circuit 110 sends the command Read_Retry(block_index) to the lower layer and retrieves the data of the data block from a candidate of the lower layer, the control circuit 110 can calculate the checking information (e.g. the checksum or the hash value of the data) corresponding to the data, and save the calculated checking information temporarily. If the same data block is read from another candidate (e.g. when the checking information of the two received data are the same), the storage element source of the other candidate such as the candidate storage device or the candidate storage system of the lower layer spends all the redundant ability. In this situation, the control circuit 110 can remove this candidate from the candidate list, and clean the saved value, then continue to search for the next candidate (e.g. the operation of step 312, 314, 316, 318, 324 and 326). The flow can be repeated until the file system 12 finds the correct version (e.g. the file system 12 uses the command Write (DATA, block_index) to recover), or the control circuit 110 tests all candidates.

According to some embodiments, all hash values of the control scheme of the storage system end can be replaced with the checksum. The similarity between these embodiments and the abovementioned embodiments are omitted here.

According to some embodiments, the command Read_Retry(block_index) of the control scheme of the storage system end can be replaced with the command Read(block_index, Retry=1) (the bit flag RETRY is set to be logic value 1) while the command Read(block_index) of the control scheme of the storage system end can be replaced with the command Read(block_RETRY=0) (the bit flag RETRY is set to be logic value 0).

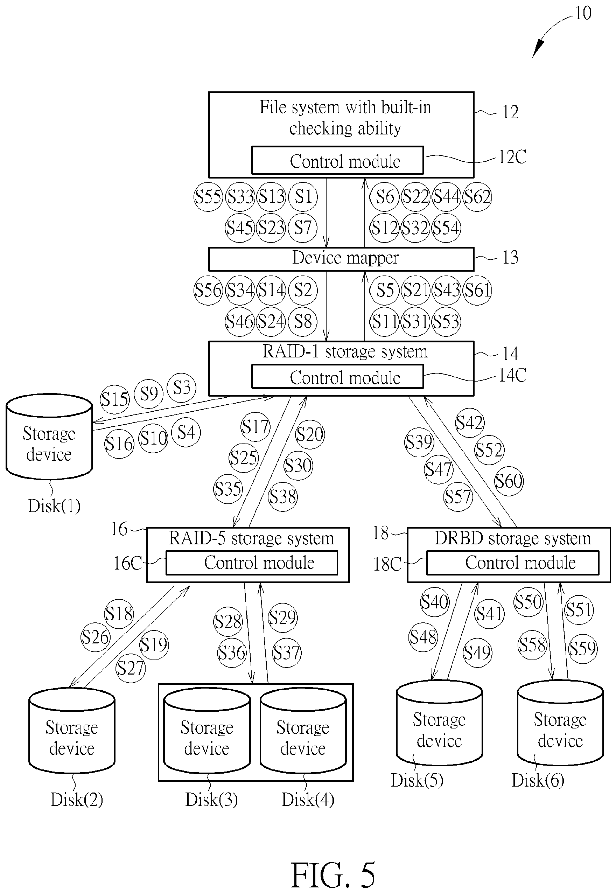

FIG. 5 is a diagram illustrating a redundant ability searching scheme of the redundant storage system 10 shown in FIG. 1. Assume the redundant storage system 10 has five redundant abilities, in which a data block can have five redundant versions. According to the embodiment, steps S1, S2,..., and S62 of the redundant ability searching scheme indicate the sequence of redundant ability searching of the data recovery mechanism. For example, the data recovery mechanism can search the five redundant versions of the redundant storage system 10 when steps S1, S2,..., and S62 are executed in order.

As shown in FIG. 5, step S1 to step S6 can correspond to the command Read(block_index), and also can be regarded as normal reading flow. For example, the command Read(block_index) can be sent from the file system 12 to the storage device Disk(1) through the device mapper 13 and the RAID-1 storage system 14 layer by layer (step S1 to step S3), and the response of the storage device Disk(1) (e.g. the data DATA sent back via the command Return(DATA, block_index)) can be sent to the file system 12 through the RAID-1 storage system 14 and the device mapper 13 layer by layer (step S4 to step S6). In addition, step S7 to step S62 can correspond to the command Read_Retry (block_index), and also can be regarded as a reading retry flow, in which step S1 to step S62 can search all the available redundant abilities. Based on the control scheme of the file system end, when the bad checksum is found, the file system 12 (more particularly, the control module 12C) activates the reading retry flow. For example, the command Read_Retry(block_index) can be sent from the file system 12 to the storage device Disk(1) through the device mapper 13 and the RAID-1 storage system 14 layer by layer (step S7 to step S9), and the response of the storage device Disk(1) (e.g. the data DATA sent via the command Return(DATA, block_index), or the error information ERR sent via the command Return (ERR, block_index) can be sent to the file system 12 through the RAID-1 storage system and the device mapper 13 layer by layer (step S10 to step S12). When the reading retry fails, the control modules 12C, 14C, 16C and 18C can proceed with the operation based on the control scheme of the file system end and the control scheme of the storage system end (e.g. at least one portion of step S13 to step S62) until (according to the stop searching rule) the searching should be stopped. For example, after the storage device Disk(1) is retried, the control module 14C can exclude the storage device Disk(1) (steps S9, S10, S15 and S16) . In another example, after the storage device Disk (2) is retried, the control module 16C can exclude the storage device Disk(2) (steps S18, S19, S26 and S27). In yet another example, after the combination of the storage devices Disk(3) and Disk(4) is retried (especially for the result of the bitwise exclusive OR corresponding to the data block), the control module 16C can exclude the storage devices Disk(3) and Disk(4) (steps S28, S29, S36 and S37). In another example, after the RAID-5 storage system 16 is retried, the control module 14C can exclude the RAID-5 storage system 16 and its lower layer (steps S17, S20, S25, S30, S35 and S38), and so on.

There are many steps shown in FIG. 5. For example, when all five redundant versions are wrong, the steps S1 to S62 are all executed. For another example, when one of the five redundant versions is correct, as long as the correct version is found, the searching can be stopped; more particularly, the searching can be stopped at an intermediate step between steps S1 to S62. Because the chance all five redundant versions are wrong is small, the chance for steps S1 to S62 to all be executed is also relatively small. In practice, for lowering the cost, the multilayer storage system stack can be simplified. Some parts of it can be removed, thereby reducing the number of redundant versions, and steps S1 to S62 can be correspondingly simplified. In addition, because the control circuit 110 uses the additional command (the command Read_Retry(block_index)) only when needed, the present invention will not burden the redundant storage system 10 when the redundant storage system 10 is normal and has no error.

According to some embodiments, the application can include a control module such as a control module for an application end, in which the control module for the application end can be the file system end which operates based on the control scheme of the file system end to perform data verification. The control module for the application end executed on the processor can be an example of the control circuit 110.

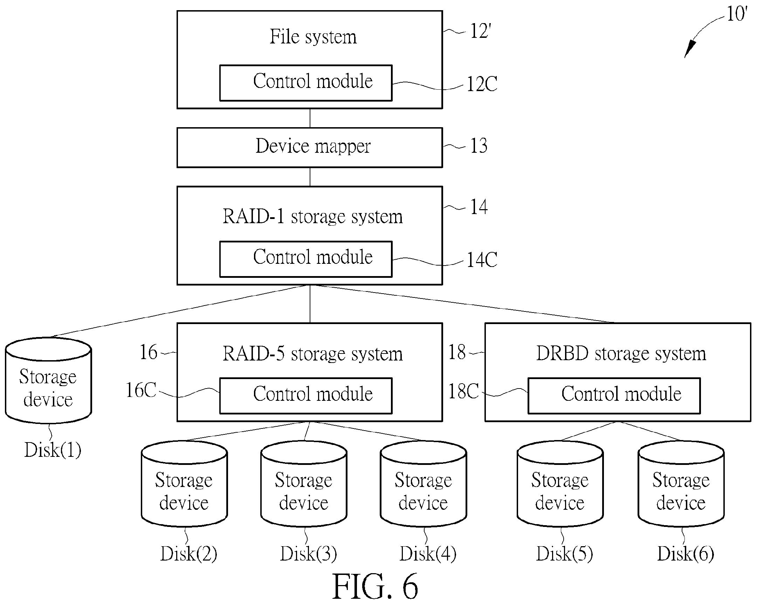

FIG. 6 is a diagram illustrating a redundant storage system 10' according to another embodiment of the present invention. Compared to the architecture shown in FIG. 1, the file system 12' of the redundant storage system 10' is a file system without built-in checking ability, in which the application can access the file system 12'. In addition, the control module for the application end can perform data recovery on the file system 12'. For example, to perform data verification, the control module for the application end can generate the checking information (e.g. the checksum or the hash value) individually according to whether the data needs to be protected. When the control module for the application end finds the data has errors via the checking information of the data, the command Read(block_index, RETRY) can be used to inform the storage system stack of the lower layer (e.g. the storage device or the storage system lower than the file system 12') via the file system 12' to allow the control modules 12C, 14C, 16C and 18C to operate based on the control scheme of the file system end and the control scheme of the storage system end. For example, the control module for the application can perform data verification, and the file system 12' only needs to deliver commands and data. In this way, the data recovery mechanism can recover the corrupted data without rebuilding the file system 12'.

According to some embodiments, the file system without built-in checking ability can acquire the ability of sending the command Read_Retry(block_index) by upgrading or updating the software or firmware. For example, the old data of the file system 12' has no attached checksum or hash value, and the file system 12' does not send the command Read_Retry(block_index). By upgrading the software or the firmware of the file system 12', however, the file system 12' acquires the ability of the control module 12C. The well-designed, well-coded application (e.g. the abovementioned application) can read the content of the data, and save the calculated checksum or the calculated hash value in the extended attributes of the old data, or save it as new data. For example, regarding a data named FILENAME, the application can save the calculated checksum or the calculated hash value as a new data, e.g. FILENAME.md5. When the new data is read a next time, the application reads the data (file names FILENAME and FILENAME.md5, respectively) to compare the checksum or the hash value. When an error is found, the control circuit 110 in the embodiments (such as one of the control modules 12C, 14C, 16C and 18C) can perform recovery via the command Read_Retry(block_index). In this way, the data recovery mechanism can recover the corrupted data without rebuilding the file system 12' and moving any data. In some embodiments, the similar concept can be applied in a storage system which does not include the control module disclosed by the present invention, such as RAID array card of software simulation (e.g. the software RAID managed by the tool program module "mdadm") or the RAID array card of hardware, and can also acquire the ability of the control modules such as the control modules 12C, 14C, 16C and 18C by upgrading the software or the firmware, and thus recognize the command Read_Retry(block_index) and perform the corresponding data recovery procedure. In addition, all the storage devices of the control module having data stored therein do not need to be amended to acquire the ability of recovering the corrupted data.

It should be noted that the conventional storage system with redundant ability can only protect when the whole storage device is corrupted. It is not able to detect bit rot, and not able to fix bit rot when it is detected. The present invention, in comparison, can perform automatic data verification and automatic data recovery to assure the user can always read the correct data. The data recovery mechanism can be implemented by one or more of the software, the firmware and the hardware without adjusting the storage system or the data in the storage device. The conventional RAID, DRBD or even the RAID array card of hardware can implement the data recovery mechanism by upgrading the software or the firmware to acquire the ability of automatic data verification or automatic data recovery. So the user of the storage system can save the amount of data, the architecture of the present invention can be easily implemented without moving any data. In addition, the present invention allows the user to combine any type/number of storage device into a storage system stack, in which when recovering data, the data recovery mechanism allows the upper layer to use the redundant ability of the lower layer. The redundant ability of the lower layer in this kind of storage system stack is impossible (for the upper layer) without at least an additional command (e.g. the command Read_Retry(block_index) or the command Read (block_index, RETRY=1)) . Based on the additional command (e.g. the command Read_Retry(block_index) or the command Read(block_index, RETRY=1), no matter whether it is implemented in the file system layer or the storage system layer), the data recovery mechanism assures the redundant ability of all the storage systems in the stack can be used.

## Claims

1. A method for performing data recovery in a redundant storage system (10, 10'), wherein the redundant storage system (10) comprises a plurality of storage devices (Disk(1)-Disk(6)), **characterized by**:
sending at least one basic command from a specific layer of a plurality of layers of the redundant storage system (10, 10') to a lower layer of the specific layer, wherein the basic command comprises a read command (Read(block_index)) arranged to request the lower layer to send back a data block corresponding to an index; and
sending at least an additional command from the specific layer block; and
to the lower layer, wherein the additional command comprises a read retry command (Read_Retry(block_index)) arranged to request the lower layer to send back a redundant data block corresponding to the index for recovering the data block;
wherein the redundant storage system (10, 10') comprises a file system (12, 12') and a plurality of storage elements (14, 16, 18), the file system is located in a topmost layer of the plurality of layers, and storage elements of the plurality of storage elements (16, 18) located in a bottommost layer of the plurality of layers comprise at least one set of storage devices (Disk(2)-Disk(6)) of the plurality of storage devices (Disk (1) -Disk(6)); each of the file system (12) and one or more of the plurality of storage elements is a file system with a built-in checking ability and its own control module capable of processing the read command (Read(block_index)) and the read retry command (Read_Retry(block_index)); the specific layer excludes the bottommost layer; and the redundant data block comes from one of the plurality of storage devices (Disk(1)-Disk(6)).

2. The method of claim 1, **characterized in that** the plurality of storage elements (14, 16, 18) comprise a first storage system (16, 18), and at least one portion (Disk(2)-Disk(6)) of the set of storage devices belongs to the first storage system (16, 18) .

3. The method of claim 2, **characterized in that** the plurality of storage elements (14, 16, 18) comprise a second storage system (14); and the first storage system (16, 18) is located below the second storage system (14) in the plurality of layers.

4. The method of claim 3, **characterized in that** the first storage system (16 ,18) belongs to the second storage system (14).

5. The method of claim 3, **characterized in that** the plurality of storage elements (14, 16, 18) comprise at least another storage device (Disk(1)), and said at least another storage device (Disk(1)) belongs to the second storage system (14).

6. The method of claim 1, **characterized in that** when the lower layer sends back an error report command Return (ERR, block_index) to the specific layer or sends back the same data to the specific layer twice, the specific layer stops sending the read retry command (Read_Retry(block_index)) to the lower layer.

7. The method of claim 1, **characterized in that** requesting the lower layer to send back the data block corresponding to the index comprises:
sending back a data and a first checking information corresponding to the data block;
wherein the method for performing data recovery in the redundant storage system (10, 10') further comprises:
generating a second checking information of the data;
comparing the first checking information and the second checking information; and
sending the additional command to the lower layer when the first checking information and the second checking information are different.

8. A method for performing data recovery in a redundant storage system (10, 10'), wherein the redundant storage system (10) comprises a plurality of storage devices (Disk(1)-Disk(6)), **characterized by**:
sending at least one basic command from a specific layer of a plurality of layers of the redundant storage system (10, 10') to a lower layer of the specific layer, wherein the basic command comprises a read command (Read(block_index)) arranged to request the lower layer to send back a data block corresponding to an index; and
sending at least an additional command from the specific layer block; and
to the lower layer, wherein the additional command comprises a read retry command (Read_Retry(block_index)) arranged to request the lower layer to send back a redundant data block corresponding to the index for recovering the data block;
wherein the redundant storage system (10, 10') comprises a file system (12, 12') and a plurality of storage elements (14, 16, 18), the file system is located in a topmost layer of the plurality of layers, and storage elements of the plurality of storage elements (16, 18) located in a bottommost layer of the plurality of layers comprise at least one set of storage devices (Disk(2)-Disk(6)) of the plurality of storage devices (Disk(1)-Disk(6)); and the file system (12') is a file system without a built-in checking ability, and the read command (Read(block_index)) and the read retry command (Read_Retry(block_index)) are integrated into a command having a same name, and a retry bit flag is unitized to distinguish the read command (Read (block_index)) from the read retry

9. A device for performing data recovery in a redundant storage system (10, 10'), **characterized by**:
a control circuit (110), located in a specific layer of a plurality of layers in the redundant storage system (10, 10') and coupled to a plurality of storage devices (Disk(1)-Disk(6)) of the redundant storage system (10, 10'), wherein the control circuit (110) is arranged to control an operation of the redundant storage system (10, 10'), and controlling the operation of the redundant storage system (10, 10') comprises:
sending at least one basic command from the specific layer to the lower layer, wherein the basic command comprises a read command (Read (block_index)) arranged to request the lower layer to send back a data block corresponding to an index specifying the address of the data block; and
sending at least an additional command from the specific layer to the lower layer, wherein the additional command comprises a read retry command (Read_Retry(block_index)) arranged to request the lower layer to send back a redundant data block corresponding to the index for recovering the data block;
wherein the redundant storage system (10, 10') comprises a file system (12, 12') and a plurality of storage elements (14, 16, 18), the file system (12, 12') is located in a topmost layer of the plurality of layers, and storage elements (16, 18) of the plurality of storage elements (14, 16, 18) are located in a bottommost layer of the plurality of layers comprising at least one set of storage devices (Disk (2) -Disk(6)) of the plurality of storage devices (Disk (1) -Disk(6)); each of the file system (12) and one or more of the plurality of storage elements is a file system with a built-in checking ability and its own control module capable of processing the read command (Read(block_index)) and the read retry command (Read_Retry(block_index)); the specific layer excludes the bottommost layer; and the redundant data block comes from one of the plurality of storage devices (Disk(1)-Disk(6)).

10. The device of claim 9, **characterized in that** the plurality of storage elements (14, 16, 18) comprise a first storage system (16, 18), and at least one portion (Disk(2)-Disk(6)) of the set of storage devices belongs to the first storage system (16, 18) .

11. The device of claim 10, **characterized in that** the plurality of storage elements (14, 16, 18) comprise a second storage system (14); and the first storage system (16, 18) is located below the second storage system (14) in the plurality of layers .

12. The device of claim 11, **characterized in that** the first storage system (16, 18) belongs to the second storage system (14).

13. The device of claim 11, **characterized in that** the plurality of storage elements (14, 16, 18) comprise at least another storage device (Disk(1)), and said at least another storage device (Disk(1)) belongs to the second storage system (14).

14. The device of claim 9, **characterized in that** requesting the lower layer to send back the data block corresponding to the index comprises:
sending back a data and a first checking information corresponding to the data block;
wherein controlling the operation of the redundant storage system (10, 10') further comprises:
generating a second checking information of the data;
comparing the first checking information and the second checking information; and
sending the additional command to the lower layer when the first checking information and the second checking information are different.

15. A device for performing data recovery in a redundant storage system (10, 10'), **characterized by**:
a control circuit (110), located in a specific layer of a plurality of layers in the redundant storage system (10, 10') and coupled to a plurality of storage devices (Disk(1)-Disk(6)) of the redundant storage system (10, 10'), wherein the control circuit (110) is arranged to control an operation of the redundant storage system (10, 10'), and controlling the operation of the redundant storage system (10, 10') comprises:
sending at least one basic command from the specific layer to the lower layer, wherein the basic command comprises a read command (Read(block_index)) arranged to request the lower layer to send back a data block corresponding to an index specifying the address of the data block; and
sending at least an additional command from the specific layer to the lower layer, wherein the additional command comprises a read retry command (Read_Retry(block_index)) arranged to request the lower layer to send back a redundant data block corresponding to the index for recovering the data block;
wherein the redundant storage system (10, 10') comprises a file system (12, 12') and a plurality of storage elements (14, 16, 18), the file system (12, 12') is located in a topmost layer of the plurality of layers, and storage elements (16, 18) of the plurality of storage elements (14, 16, 18) are located in a bottommost layer of the plurality of layers comprising at least one set of storage devices (Disk (2) -Disk(6)) of the plurality of storage devices (Disk(1)-Disk(6)); and the file system (12') is a file system without a built-in checking ability, and the read command (Read(block_index) ) and the read retry command (Read_Retry(block_index)) are integrated into a command having a same name, and a retry bit flag is unitized to distinguish the read command (Read(block_index)) from the read retry command (Read_Retry(block_index)).

## Patentansprüche

1. Verfahren zur Durchführung einer Daten-Wiederherstellung in einem redundanten Speichersystem (10, 10'), worin das redundante Speichersystem (10) mehrere Speichergeräte (Disk(1)-Disk(6)) umfasst, **gekennzeichnet durch**:
Senden mindestens eines grundlegenden Befehls von einer spezifischen Ebene der mehreren Ebenen des redundanten Speichersystems (10, 10') an eine untere Ebene der spezifischen Ebene, worin der grundlegende Befehl einen Lesebefehl (Read(block_index)) umfasst, der vorgesehen ist, die untere Ebene aufzufordern einen Datenblock entsprechend einem Index zurückzusenden; und
Senden mindestens eines zusätzlichen Befehls von der spezifischen Ebene zu der unteren Ebene, worin der zusätzlicher Befehl einen Lese-Wiederholbefehl (Read_Retry(block_index)) umfasst, der vorgesehen ist, die untere Ebene aufzufordern, einen redundanten Datenblock entsprechend dem Index zum Wiederherstellen des Datenblöcke zurückzusenden;
worin das redundante Speichersystem (10, 10') ein Dateisystem (12, 12') und mehrere Speicherelemente (14, 16, 18) umfasst, worin das Dateisystem in einer obersten Ebene der mehreren Ebenen vorgesehen ist, und worin Speicherelemente der mehreren Speicherelemente (16, 18), die in einer unterste Ebene der mehreren Ebenen angeordnet sind, mindestens einen Satz an Speichergeräten (Disk(2)-Disk(6)) der mehreren Speichergeräte (Disk(1)-Disk(6)) umfasst; worin jedes Dateisystem (12) und ein oder mehrere der Speicherelemente ein Dateisystem mit einer eingebauten Überprüfungsfähigkeit ist, und worin und dessen eigenes Steuermodul den Lesebefehl (Read(block_index)) und den Lese-Wiederholbefehl (Read_Retry-(block_index)) verarbeiten kann; worin die spezifische Ebene die unterste Ebene ausschließt; und worin der redundante Datenblock von einem der mehreren Speichergeräte (Disk(1)-Disk(6)) kommt.

2. Verfahren nach Anspruch 1, **dadurch gekennzeichnet, dass** die mehreren Speicherelemente (14, 16, 18) ein erstes Speichersystem (16, 18) umfassen, und dass mindestens ein Bereich (Disk(2)-Disk(6)) des Satzes von Speichergeräten zu dem ersten Speichersystem (16, 18) gehört.

3. Verfahren nach Anspruch 2, **dadurch gekennzeichnet, dass** die mehreren Speicherelemente (14, 16, 18) ein zweites Speichersystem (14) umfassen; und dass das erste Speichersystem (16, 18) unter dem zweiten Speichersystem (14) in den mehreren Ebenen angeordnet ist.

4. Verfahren nach Anspruch 3, **dadurch gekennzeichnet, dass** das erste Speichersystem (16,18) zu dem zweiten Speichersystem (14) gehört.

5. Verfahren nach Anspruch 3, **dadurch gekennzeichnet, dass** die mehreren Speicherelemente (14, 16, 18) mindestens ein anderes Speichergerät (Disk(1)) umfassen, und dass das mindestens andere Speichergerät (Disk(1)) zu dem zweiten Speichersystem (14) gehört.

6. Verfahren nach Anspruch 1, **dadurch gekennzeichnet, dass** wenn die untere Ebene einen Fehlermeldungs-Return-Befehl (ERR, block_index) zu der spezifischen Ebene zurücksendet oder die gleichen Daten zu der spezifischen Ebene zweimal zurücksendet, die spezifische Ebene das Senden des Lese-Wiederholbefehls (Read_Retry(block_index)) zu der unteren Ebene einstellt.

7. Verfahren nach Anspruch 1, **dadurch gekennzeichnet, dass** Auffordern der unteren Ebene, den Datenblock entsprechend dem Index zurückzusenden, umfasst:
Zurücksenden von Daten und einer ersten Überprüfungs-Information entsprechend dem Datenblock;
worin das Verfahren zur Durchführung der Daten-Wiederherstellung in dem redundanten Speichersystem (10, 10') weiter umfasst:
Erzeugen einer zweiten Überprüfungs-Information der Daten;
Vergleichen der ersten Überprüfungs-Information und der zweiten Überprüfungs-Information; und
Senden des zusätzlichen Befehls zu der unteren Ebene, wenn die erste Überprüfungs-Information und die zweite Überprüfungs-Information verschieden sind.

8. Verfahren zur Durchführung einer Daten-Wiederherstellung in einem redundanten Speichersystem (10, 10'), worin das redundante Speichersystem (10) mehrere Speichergeräte (Disk(1)-Disk(6)) umfasst, **gekennzeichnet durch**:
Senden mindestens eines grundlegenden Befehls von einer spezifischen Ebene der mehreren Ebenen des redundanten Speichersystems (10, 10') an eine untere Ebene der spezifischen Ebene, worin der grundlegende Befehl einen Lesebefehl (Read(block_index)) umfasst, der vorgesehen ist, die untere Ebene aufzufordern, einen Datenblock entsprechend einem Index zurückzusenden; und
Senden mindestens eines zusätzlichen Befehls von der spezifischen Ebene zu der unteren Ebene, worin der zusätzliche Befehl einen Lese-Wiederholbefehl (Read_Retry(block_index)) umfasst, der vorgesehen ist, die untere Ebene aufzufordern, einen redundanten Datenblock entsprechend dem Index zur Wiederherstellung des Datenblocks zurückzusenden;
worin das redundante Speichersystem (10, 10') ein Dateisystem (12, 12') und mehrere Speicherelemente (14, 16, 18) umfasst, worin das Dateisystem in einer obersten Ebene der mehreren Ebenen angeordnet ist, und worin Speicherelemente der mehreren Speicherelemente (16, 18), die in einer untersten Ebene der mehreren Ebenen angeordnet sind, mindestens einen Satz Speichergeräte (Disk(2)-Disk(6)) der mehreren Speichergeräte (Disk(1)-Disk(6)) umfassen; und worin das Dateisystem (12') ein Dateisystem ohne eingebaute Überprüfungsfähigkeit ist, und worin der Lesebefehl (Read(block_index)) und der Lese-Wiederholbefehl (Read_Retry-(block_index)) in einem Befehl mit dem gleichen Namen integriert sind, und worin ein Wiederholungs-Markierungsbit vereinheitlicht ist, um den Lesebefehl (Read(block_index)) von dem Lese-Wiederholbefehl (Read_Retry(block_index)) zu unterscheiden.

9. Gerät zur Durchführung einer Daten-Wiederherstellung in einem redundanten Speichersystem (10, 10'), **gekennzeichnet durch**:
einen Steuerschaltkreis (110), der in einer spezifischen Ebene der mehreren Ebenen in dem redundanten Speichersystem (10, 10') vorgesehen und mit mehreren Speichergeräten (Disk(1)-Disk(6)) des redundanten Speichersystems (10, 10') gekoppelt ist, worin der Steuerschaltkreis (110) angeordnet ist, einen Betrieb des redundanten Speichersystems (10, 10') zu steuern, und worin das Steuern des Betriebs des redundanten Speichersystems (10, 10') umfasst:
Senden mindestens eines grundlegenden Befehls von der spezifischen Ebene zu der unteren Ebene, worin der grundlegende Befehl einen Lesebefehl (Read(block_index)) umfasst, der vorgesehen ist, die untere Ebene aufzufordern, einen Datenblock entsprechend einem Index, der die Adresse des Datenblocks spezifiziert, zurückzusenden; und
Senden mindestens eines zusätzlichen Befehls von der spezifischen Ebene zu der unteren Ebene, worin der zusätzliche Befehl einen Lese-Wiederholbefehl (Read_Retry(block_index)) umfasst, der vorgesehen ist, die untere Ebene aufzufordern, einen redundanten Datenblock entsprechend dem Index zur Wiederherstellung des Datenblocks zurückzusenden;
worin das redundante Speichersystem (10, 10') ein Dateisystem (12, 12') und mehrere Speicherelemente (14, 16, 18) umfasst, worin das Dateisystem (12, 12') in einer obersten Ebene der mehreren Ebenen vorgesehen ist, und worin Speicherelemente (16, 18) der mehreren Speicherelemente (14, 16, 18), die in einer untersten Ebene der mehreren Ebenen vorgesehen sind, mindestens einen Satz Speichergeräte (Disk(2)-Disk(6)) der mehreren Speichergeräte (Disk(1)-Disk(6)) umfassen; worin jedes Dateisystem (12) und ein oder mehrere der mehreren Speicherelemente ein Dateisystem mit einer eingebauten Überprüfungsfähigkeit ist und worin dessen eigenes Steuermodul den Lesebefehl (Read(block_index)) und den Lese-Wiederholbefehl (Read_Retry(block_index)) verarbeiten kann; worin die spezifische Ebene die unterste Ebene ausschliesst; und worin der redundante Datenblock von einem der mehreren Speichergeräte (Disk(1)-Disk(6)) kommt.

10. Gerät nach Anspruch 9, **dadurch gekennzeichnet, dass** die mehreren Speicherelemente (14, 16, 18) ein erstes Speichersystem (16, 18) umfassen und mindestens ein Bereich (Disk(2)-Disk(6)) des Satzes von Speichergeräten zu dem ersten Speichersystem (16, 18) gehört.

11. Gerät nach Anspruch 10, **dadurch gekennzeichnet, dass** die mehreren Speicherelemente (14, 16, 18) ein zweites Speichersystem (14) umfassen und dass das erste Speichersystem (16, 18) unter dem zweiten Speichersystem (14) in den mehreren Ebenen vorgesehen ist.

12. Gerät nach Anspruch 11, **dadurch gekennzeichnet, dass** das erste Speichersystem (16, 18) zu dem zweitem Speichersystem (14) gehört.

13. Gerät nach Anspruch 11, **dadurch gekennzeichnet, dass** die mehreren Speicherelemente (14, 16, 18) mindestens ein anderes Speichergerät (Disk(1)) umfassen, worin das mindestens andere Speichergerät (Disk(1)) zu dem zweiten Speichersystem (14) gehört.

14. Gerät nach Anspruch 9, **dadurch gekennzeichnet, dass** Auffordern der unteren Ebene, den Datenblock entsprechend dem Index zurückzusenden, umfasst:
Zurücksenden von Daten und einer ersten Überprüfungs-Information entsprechend dem Datenblock;
worin Steuern des Betriebs des redundanten Speichersystems (10, 10') weiter umfasst:
Erzeugen einer zweiten Überprüfungs-Information der Daten;
Vergleichen der ersten Überprüfungs-Information und der zweiten Überprüfungs-Information; und
Senden des zusätzlichen Befehls zu der unteren Ebene, wenn die erste Überprüfungs-Information und die zweite Überprüfungs-Information verschieden sind.

15. Gerät zur Durchführung einer Daten-Wiederherstellung in einem redundanten Speichersystem (10, 10'), **gekennzeichnet durch**:
einen Steuerschaltkreis (110), der in einer spezifischen Ebene der mehreren Ebenen in dem redundanten Speichersystem (10, 10') vorgesehen und mit mehreren Speichergeräten (Disk(1)-Disk(6)) des redundanten Speichersystems (10, 10') gekoppelt ist, worin der Steuerschaltkreis (110) angeordnet ist, einen Betrieb des redundanten Speichersystems (10, 10') zu steuern, und worin Steuern des Betriebs des redundanten Speichersystems (10, 10') umfasst:
Senden mindestens eines grundlegenden Befehls von der spezifischen Ebene zu der unteren Ebene, worin der grundlegende Befehl einen Lesebefehl (Read(block_index)) umfasst, der vorgesehen ist, die untere Ebene aufzufordern, einen Datenblock entsprechend einem Index zurückzusenden, der die Adresse des Datenblocks spezifiziert; und
Senden mindestens eines zusätzlichen Befehls von dre spezifischen Ebene zu der unteren Ebene, worin der zusätzliche Befehl einen Lese-Wiederholbefehl (Read_Retry(block_index)) umfasst, der vorgeshen ist, die untere Ebene aufzufordern, einen redundanten Datenblock entspechend dem Index zur Wiederherstellung des Datenblocks zurückzusenden;
worin das redundante Speichersystem (10, 10') ein Dateisystem (12, 12') und mehrere Speicherelemente (14, 16, 18) umfasst, worin das Dateisystem (12, 12') in einer obersten Ebene der mehreren Ebenen vorgesehen ist, und worin Speicherelemente (16, 18) der mehreren Speicherelemente (14, 16, 18) in einer untersten Ebene der mehreren Ebenen, die mindestens einen Satz Speichergeräte (Disk(2)-Disk(6)) der mehreren Speichergeräte (Disk(1)-Disk(6)) umfasst, vorgesehen ist, und worin das Dateisystem (12') ein Dateisystem ohne eine eingebaute Überprüfungsfähigkeit ist, und worin der Lesebefehl (Read(block_index)) und der Lese-Wiederholbefehl (Read_Retry(block_index)) in einem Befehl mit dem gleichen Namen integriert sind, und worin eine Wiederholungs-Markierungsbit vereinheitlicht ist, um den Lesebefehl (Read(block_index)) von dem Lese-Wiederholbefehl (Read_Retry(block_index)) zu unterscheiden.

## Revendications

1. Procédé pour effectuer une récupération de données dans un système de stockage redondant (10, 10'), dans lequel le système de stockage redondant (10) comprend une pluralité de dispositifs de stockage (Disque(1)-Disque(6)), **caractérisé par** :
l'envoi d'au moins une commande de base d'une couche spécifique d'une pluralité de couches du système de stockage redondant (10, 10') à une couche inférieure de la couche spécifique, la commande de base comprenant une commande de lecture (Read(block_index)) conçue pour demander à la couche inférieure de renvoyer un bloc de données correspondant à un index ; et
l'envoi d'au moins une commande supplémentaire de la couche spécifique à la couche inférieure, la commande supplémentaire comprenant une commande de relance de lecture (Read_Retry(block_index)) conçue pour demander à la couche inférieure de renvoyer un bloc de données redondant correspondant à l'index pour récupérer le bloc de données ;
dans lequel le système de stockage redondant (10, 10') comprend un système de fichiers (12, 12') et une pluralité d'éléments de stockage (14, 16, 18), le système de fichiers est situé dans la couche la plus haute de la pluralité de couches, et des éléments de stockage de la pluralité d'éléments de stockage (16, 18) situés dans la couche la plus basse de la pluralité de couches comprennent au moins un ensemble de dispositifs de stockage (Disque(2)-Disque(6)) de la pluralité de dispositifs de stockage (Disque(1)-Disque(6)) ; chacun parmi le système de fichiers (12) et un ou plusieurs éléments parmi la pluralité d'éléments de stockage est un système de fichiers avec une capacité de vérification intégrée et son propre module de commande capable de traiter la commande de lecture (Read(block_index)) et la commande de relance de lecture (Read_Retry(block_index)) ; la couche spécifique exclut la couche la plus basse ; et le bloc de données redondant provient de l'un de la pluralité de dispositifs de stockage (Disque(1)-Disque(6)).

2. Procédé selon la revendication 1, **caractérisé en ce que** la pluralité d'éléments de stockage (14, 16, 18) comprend un premier système de stockage (16, 18), et au moins une partie (Disque(2)-Disque(6)) de l'ensemble de dispositifs de stockage appartient au premier système de stockage (16, 18).

3. Procédé selon la revendication 2, **caractérisé en ce que** la pluralité d'éléments de stockage (14, 16, 18) comprend un second système de stockage (14) ; et le premier système de stockage (16, 18) est situé en dessous du second système de stockage (14) dans la pluralité de couches.

4. Procédé selon la revendication 3, **caractérisé en ce que** le premier système de stockage (16, 18) appartient au second système de stockage (14).

5. Procédé selon la revendication 3, **caractérisé en ce que** la pluralité d'éléments de stockage (14, 16, 18) comprend au moins un autre dispositif de stockage (Disque(1)), et ledit au moins un autre dispositif de stockage (Disque(1)) appartient au second système de stockage (14).

6. Procédé selon la revendication 1, **caractérisé en ce que**, lorsque la couche inférieure renvoie une commande de rapport d'erreur Retum(ERR, block_index) à la couche spécifique ou renvoie les mêmes données à la couche spécifique deux fois, la couche spécifique arrête l'envoi de la commande de relance de lecture (Read_Retry(block_index)) à la couche inférieure.

7. Procédé selon la revendication 1, **caractérisé en ce que** la demande de la couche inférieure pour renvoyer le bloc de données correspondant à l'index comprend :
le renvoi de données et de premières informations de vérification correspondant au bloc de données ;
le procédé pour effectuer une récupération de données dans le système de stockage redondant (10, 10') comprenant en outre :
la génération de secondes informations de vérification des données ;
la comparaison des premières informations de vérification et des secondes informations de vérification ;
et l'envoi de la commande supplémentaire à la couche inférieure lorsque les premières informations de vérification et les secondes informations de vérification sont différentes.

8. Procédé pour effectuer une récupération de données dans un système de stockage redondant (10, 10'), dans lequel le système de stockage redondant (10) comprend une pluralité de dispositifs de stockage (Disque(1)-Disque(6)) **caractérisé par** :
l'envoi d'au moins une commande de base d'une couche spécifique d'une pluralité de couches du système de stockage redondant (10, 10') à une couche inférieure de la couche spécifique, la commande de base comprenant une commande de lecture (Read(block_index)) conçue pour demander à la couche inférieure de renvoyer un bloc de données correspondant à un index ; et
l'envoi d'au moins une commande supplémentaire de la couche spécifique à la couche inférieure, la commande supplémentaire comprenant une commande de relance de lecture (Read_Retry(block_index)) conçue pour demander à la couche inférieure de renvoyer un bloc de données redondant correspondant à l'index pour récupérer le bloc de données ;
dans lequel le système de stockage redondant (10, 10') comprend un système de fichiers (12, 12') et une pluralité d'éléments de stockage (14, 16, 18), le système de fichiers est situé dans la couche la plus haute de la pluralité de couches, et des éléments de stockage de la pluralité d'éléments de stockage (16, 18) situés dans la couche la plus basse de la pluralité de couches comprennent au moins un ensemble de dispositifs de stockage (Disque(2)-Disque(6)) de la pluralité de dispositifs de stockage (Disque(1)-Disque(6)) ; et le système de fichiers (12') est un système de fichiers sans capacité de vérification intégrée, et la commande de lecture (Read (block_index)) et la commande de relance de lecture (Read_Retry(block_index)) sont intégrées dans une commande ayant un même nom, et un drapeau de bit de relance est unifié pour distinguer la commande de lecture (Read (block_index)) de la commande de relance de lecture (Read_Retry(block_index)).

9. Dispositif pour effectuer une récupération de données dans un système de stockage redondant (10, 10'), **caractérisé par** :
un circuit de commande (110), situé dans une couche spécifique d'une pluralité de couches dans le système de stockage redondant (10, 10') et couplé à une pluralité de dispositifs de stockage (Disque(1)-Disque(6)) du système de stockage redondant (10, 10'), le circuit de commande (110) étant conçu pour commander une opération du système de stockage redondant (10, 10'), et la commande du fonctionnement du système de stockage redondant (10, 10') comprenant :
l'envoi d'au moins une commande de base de la couche spécifique à la couche inférieure, la commande de base comprenant une commande de lecture (Read(block_index)) conçue pour demander à la couche inférieure de renvoyer un bloc de données correspondant à un index spécifiant l'adresse du bloc de données ; et
l'envoi d'au moins une commande supplémentaire de la couche spécifique à la couche inférieure, la commande supplémentaire comprenant une commande de relance de lecture (Read_Retry(block_index)) conçue pour demander à la couche inférieure de renvoyer un bloc de données redondant correspondant à l'index pour récupérer le bloc de données ;
dans lequel le système de stockage redondant (10, 10') comprend un système de fichiers (12, 12') et une pluralité d'éléments de stockage (14, 16, 18), le système de fichiers (12, 12') est situé dans la couche la plus haute de la pluralité de couches, et des éléments de stockage (16, 18) de la pluralité d'éléments de stockage (14, 16, 18) sont situés dans la couche la plus basse de la pluralité de couches comprenant au moins un ensemble de dispositifs de stockage (Disque(2)-Disque(6)) de la pluralité de dispositifs de stockage (Disque(1)-Disque(6)) ; chacun parmi le système de fichiers (12) et un ou plusieurs de la pluralité d'éléments de stockage est un système de fichiers avec une capacité de vérification intégrée et son propre module de commande capable de traiter la commande de lecture (Read(block_index)) et la commande de relance de lecture (Read_Retry(block_index)) ; la couche spécifique exclut la couche la plus basse ; et le bloc de données redondant provient de l'un de la pluralité de dispositifs de stockage (Disque(1)-Disque(6)).

10. Dispositif selon la revendication 9, **caractérisé en ce que** la pluralité d'éléments de stockage (14, 16, 18) comprend un premier système de stockage (16, 18), et au moins une partie (Disque(2)-Disque(6)) de l'ensemble de dispositifs de stockage appartient au premier système de stockage (16, 18).

11. Dispositif selon la revendication 10, **caractérisé en ce que** la pluralité d'éléments de stockage (14, 16, 18) comprend un second système de stockage (14) ; et le premier système de stockage (16, 18) est situé en dessous du second système de stockage (14) dans la pluralité de couches.

12. Dispositif selon la revendication 11, **caractérisé en ce que** le premier système de stockage (16, 18) appartient au second système de stockage (14).

13. Dispositif selon la revendication 11, **caractérisé en ce que** la pluralité d'éléments de stockage (14, 16, 18) comprend au moins un autre dispositif de stockage (Disque(1)), et ledit au moins un autre dispositif de stockage (Disque(1)) appartient au second système de stockage (14).

14. Dispositif selon la revendication 9, **caractérisé en ce que** la demande de la couche inférieure à renvoyer le bloc de données correspondant à l'index comprend :
le renvoi de données et de premières informations de vérification correspondant au bloc de données ;
la commande du fonctionnement du système de stockage redondant (10, 10') comprenant en outre :
la génération de secondes informations de vérification des données ;
la comparaison des premières informations de vérification et des secondes informations de vérification ; et
l'envoi de la commande supplémentaire à la couche inférieure lorsque les premières informations de vérification et les secondes informations de vérification sont différentes.

15. Dispositif pour effectuer une récupération de données dans un système de stockage redondant (10, 10'), **caractérisé par** :
un circuit de commande (110), situé dans une couche spécifique d'une pluralité de couches dans le système de stockage redondant (10, 10') et couplé à une pluralité de dispositifs de stockage (Disque(1)-Disque(6)) du système de stockage redondant (10, 10'), le circuit de commande (110) étant conçu pour commander une opération du système de stockage redondant (10, 10'), et la commande du fonctionnement du système de stockage redondant (10, 10') comprenant :
l'envoi d'au moins une commande de base de la couche spécifique à la couche inférieure, la commande de base comprenant une commande de lecture (Read (block_index)) conçue pour demander à la couche inférieure de renvoyer un bloc de données correspondant à un index spécifiant l'adresse du bloc de données ; et
l'envoi d'au moins une commande supplémentaire de la couche spécifique à la couche inférieure, la commande supplémentaire comprenant une commande de relance de lecture (Read_Retry(block_index)) conçue pour demander à la couche inférieure de renvoyer un bloc de données redondant correspondant à l'index pour récupérer le bloc de données ;
dans lequel le système de stockage redondant (10, 10') comprend un système de fichiers (12, 12') et une pluralité d'éléments de stockage (14, 16, 18), le système de fichiers (12, 12') est situé dans la couche la plus haute de la pluralité de couches, et des éléments de stockage (16, 18) de la pluralité d'éléments de stockage (14, 16, 18) sont situés dans la couche la plus basse de la pluralité de couches comprenant au moins un ensemble de dispositifs de stockage (Disque(2)-Disque(6)) de la pluralité de dispositifs de stockage (Disque(1)-Disque(6)) ; et le système de fichiers (12') est un système de fichiers sans capacité de vérification intégrée, et la commande de lecture (Read (block_index)) et la commande de relance de lecture (Read_Retry(block_index)) sont intégrées dans une commande ayant un même nom, et un drapeau de bit de relance est unifié pour distinguer la commande de lecture (Read (block_index)) de la commande de relance de lecture (Read_Retry(block_index)).
